# EUROPÄISCHE PATENTSCHRIFT

(11) **EP 1 188 648 B1**
(45) Veröffentlichungstag und Bekanntmachung des Hinweises auf die Patenterteilung: **14.01.2004**
(21) Anmeldenummer: 01122058.9
(22) Anmeldetag: 14.09.2001
(51) Int. Cl.: B62D 25/20

(54) **Bodenstruktur einer Fahrzeugkarosserie**
Floor structure for a vehicle body
Structure de plancher d'une carrosserie automobile

(30) Priorität: 15.09.2000 DE 10045638
(43) Veröffentlichungstag der Anmeldung: 20.03.2002
(73) Patentinhaber: ADAM OPEL AG, 65423 Rüsselsheim (DE)
(72) Erfinder: Bechthold, Ralf-Dieter, 55278 Weinolsheim (DE)

(56) Entgegenhaltungen:
- GB-A- 2 306 922
- PATENT ABSTRACTS OF JAPAN vol. 1997, no. 12, 25. Dezember 1997 (1997-12-25) -& JP 09 216579 A (NISSAN MOTOR CO LTD), 19. August 1997 (1997-08-19)
- PATENT ABSTRACTS OF JAPAN vol. 1996, no. 09, 30. September 1996 (1996-09-30) -& JP 08 133131 A (NISSAN MOTOR CO LTD), 28. Mai 1996 (1996-05-28)

## Beschreibung

Die Erfindung bezieht sich auf eine Fahrzeugkarosserie mit einem zwischen zwei Seitenschwellern und unterhalb des Fahrgastbereiches sich erstreckenden Bodenblech, das in der Mittellängsachse einen Mitteltunnel aufweist, und mit einem Fersenblech, das die Verbindung zwischen dem Bodenblech und einem höher gelegenen weiteren Bodenblech herstellt. Eine solche Fahrzeugkarosserie ist beispielsweise aus der Schrift GB 2 306 922 A bekannt.

Insbesondere bezieht sich die Erfindung auf die Bodenstruktur eines Fahrzeuges im Bereich der Rücksitze. Auch für diesen Karosseriebereich besteht das generelle Problem, die Bodenstruktur in Querrichtung ausreichend steif zu gestalten, damit bei einer Seitenkollision die Fahrgastzelle möglichst wenig eingedrückt wird. Es wurde daher schon vorgeschlagen, den Fahrzeugboden mit sogenannten Querstreben zu versehen, auf denen Sitzschienen befestigt werden. Diese Querstreben stützen sich einerseits seitlich an Seitenschwellern, die bei einem Seitenaufprall sich unter Aufnahme von Energie verformen, und andererseits in der Mitte an einem Mitteltunnel ab. Der Bereich der Rücksitze erhält eine Querverstärkung durch das Fersenblech, das den Übergang zwischen dem Fahrzeugboden im Fahrgastbereich und dem Fahrzeugboden im Kofferraum schafft.

Es wurde schon vorgeschlagen, diesen Bereich mit einer Querstrebe an der Außenseite des Fersenblechs zusätzlich zu verstärken.

Die Erfindung beruht damit auf der Aufgabe, eine verbesserte Verstärkung der Bodenstruktur im hinteren Fahrgastbereich zu erzielen.

Dazu wird vorgeschlagen, dass auf dem Bodenblech zu beiden Seiten des Mitteltunnels jeweils ein in der Draufsicht L-förmiges Verstärkungsprofil gesetzt ist, wobei ein Querarm parallel zum Fersenblech und ein Längsarm parallel zum Mitteltunnel verläuft, und jedes verstärkungsprofil zusammen mit dem Bodenblech und dem Fersenblech bzw. der Seitenwand des Mitteltunnels einen im Querschnitt geschlossenen Kasten bildet.

Die bei einem Seitenaufprall in diesem Bereich auftretenden Kräfte können damit sowohl über die schon erwähnte Querstrebe als auch durch das zusätzlich vorgesehene Verstärkungsprofil aufgefangen werden, wobei die Wirkung des Verstärkungsprofils dadurch unterstützt wird, dass es sich über einen relativ weiten Bereich am Mitteltunnel abstützt.

Des Weiteren besteht das Problem, auch für die hinteren Sitze eine flexible Einbaumöglichkeit zu erhalten, die bei der üblichen Ausführung der hinteren Sitze als durchgehende Sitzbank nicht gewährleistet ist.

Das Verstärkungsprofil kann daher so ausgelegt werden, dass es zumindest einen Auflagepunkt für eine Sitzschiene erhält. Dadurch können auch die hinteren Sitze einzeln ausgeführt und auf Sitzschienen geführt werden, die jeweils mit ihrem vorderen Ende auf der Querstrebe und mit ihrem hinteren Ende auf dem Verstärkungsprofil befestigt sind.

Die Erfindung soll im Folgenden anhand eines Ausführungsbeispiels, dargestellt in zwei Figuren, näher erläutert werden.
- Fig. 1: zeigt dazu eine Draufsicht auf die Bodenstruktur im hinteren Fahrgastbereich in der rechten Fahrzeughälfte;
- Fig. 2: zeigt den dazu spiegelbildlichen Bereich in der linken Fahrzeughälfte mit aufgesetzten Sitzschienen.

Die gezeigten Ausschnitte sind spiegelbildlich zueinander angeordnet, so dass korrespondierende Teile mit denselben Bezugszeichen versehen sind.

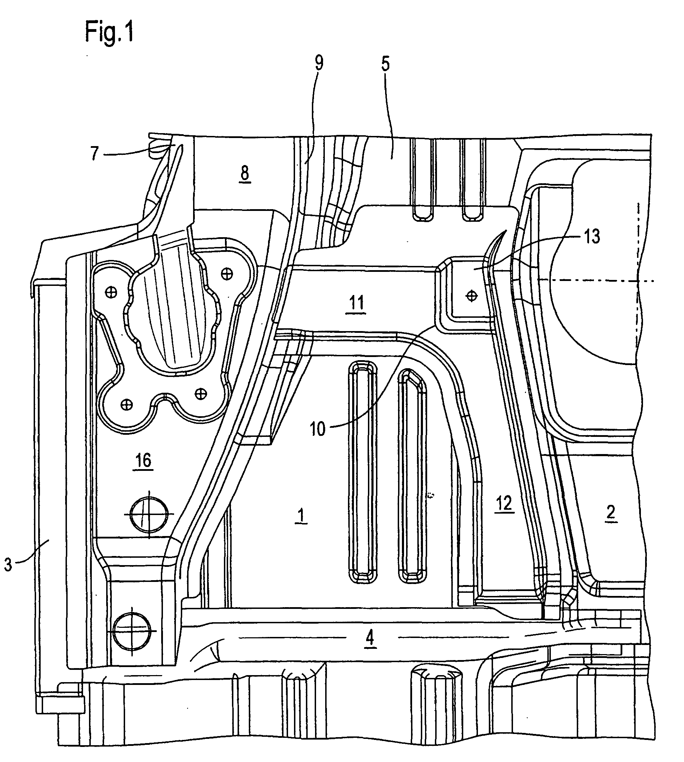

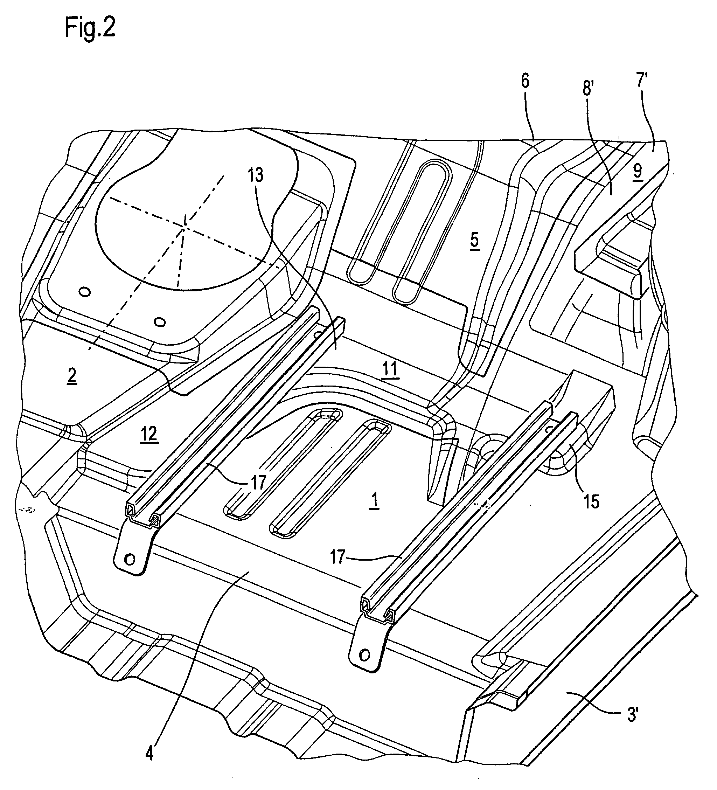

Ein vorderes Bodenblech 1 unterhalb eines Fahrgastbereichs verläuft zwischen zwei Seitenschwellern 3, 3'. Fig. 1 zeigt den Bereich des Bodenblechs 1, der sich zwischen einem Mitteltunnel 2 und dem rechten Seitenschweller 3 erstreckt. Fig. 2 zeigt den dazu spiegelbildlichen Bereich zwischen dem Mitteltunnel 2 und dem linken Seitenschweller 3'. An seinem hinteren Ende geht das Bodenblech 1 über ein Fersenblech 5 in ein hinteres Bodenblech 6 über, das etwas höher liegt als das Bodenblech 1 im Fahrgastbereich. Es liegt in der Regel sogar etwas höher als der obere Abschlussbogen des Mitteltunnels 2. Das hintere Bodenblech 6 erstreckt sich zwischen zwei Radhäusern 7, 7', deren Anbindung an das vordere Bodenblech 1 im Fahrgastbereich jeweils über einen Hinterrahmen 8 bzw. 8' erfolgt, der mindestens eine vertikal stehende Wand 9 bzw. 9' aufweist. Diese Wand verläuft über dem hinteren Bodenblech 6, dem Fersenblech 5 und dem vorderen Bodenblech 1 zur Querstrebe 4 und nähert sich dabei dem Seitenschweller 3 bzw. 3'.

Um die Quersteifigkeit im Fahrgastbereich zu erhöhen, ist ein in jeder Hälfte jeweils ein in der Draufsicht L-förmiges Verstärkungsprofil 10 vorgesehen, das mit einem Querarm 11 parallel zum Fersenblech 5 und mit den anderen Arm 12 parallel zur Seitenwand des Mitteltunnels 2 verläuft.

Der Querarm 11 verläuft von der vertikalen Wand 9, 9' des Hinterrahmens bis zum Mitteltunnel 2, während der Längsarm 12 sich vom Fersenblech 5 bis zum Quersteg 4 erstreckt. Im Querschnitt ist das Verstärkungsprofil L-förmig ausgeführt, so dass sich mit dem Bodenblech 1 und dem Fersenblech 5 bzw. der Seitenwand des Mitteltunnels 2 jeweils ein im Querschnitt geschlossener Kasten ergibt.

In der Ecke zwischen dem Fersenblech 5 und dem Mitteltunnel 2 besitzt das Verstärkungsblech 10 eine Aufprägung 13 als Auflage und Befestigungspunkt für eine Sitzschiene. Eine weitere Auflage für eine parallele Sitzschiene befindet sich im Hinterrahmen 8 bzw. 8'. Hierbei handelt es sich um einen aus Blech geformten Sockel 15, der am Bodenblech 1 befestigt ist und an das Radhaus 7 bzw. 7' anschließt.

Der Bereich zwischen dem Seitenschweller 3 bzw. 3' und dem Mitteltunnel 2 wird jeweils durch ein Abschlussblech 16 nach oben hin geschlossen, wodurch der Hinterrahmen 8 bzw. 8' ein geschlossenes Profil erhält.

In jeder Fahrzeughälfte sind zwei zueinander parallel verlaufende Sitzschienen 17 vorhanden, die an ihren vorderen Enden an der Querstrebe 4 und an ihren hinteren Enden entweder mit dem Auflagepunkt (Aufprägung 13) am Abschlussblech 16 oder mit dem Auflagepunkt (Sockel 15) im Hinterrahmen befestigt sind.

## Patentansprüche

1. Fahrzeugkarosserie mit einem zwischen zwei Seitenschwellern (3, 3') und unterhalb des Fahrgastbereiches sich erstreckenden Bodenblech (1), das in der Mittellängsachse einen Mitteltunnel (2) aufweist, und mit einem Fersenblech (5), das die Verbindung zwischen dem Bodenblech (1) und einem höher gelegenen weiteren Bodenblech (6) herstellt, **dadurch gekennzeichnet, dass** auf dem Bodenblech (1) zu beiden Seiten des Mitteltunnels (2) jeweils ein in der Draufsicht L-förmiges Verstärkungsprofil (10) gesetzt ist, wobei ein Querarm (11) parallel zum Fersenblech (5) und ein Längsarm (12) parallel zum Mitteltunnel (2) verläuft, und jedes Verstärkungsprofil(10) zusammen mit dem Bodenblech (1) und dem Fersenblech (6) bzw. der Seitenwand des Mitteltunnels (2) einen im Querschnitt geschlossenen Kasten bildet.

2. Fahrzeugkarosserie nach Anspruch 1, **dadurch gekennzeichnet, dass** der Querarm (11) sich bis zu einem im wesentlichen parallel zum Seitenschweller verlaufenden Hinterrahmen (8, 8') erstreckt.

3. Fahrzeugkarosserie nach Anspruch 1 oder 2, **dadurch gekennzeichnet, dass** der Längsarm (12) sich bis zu einer Querstrebe (4) erstreckt.

4. Fahrzeugkarosserie nach einem der vorhergehenden Ansprüche, **dadurch gekennzeichnet, dass** das Verstärkungsprofil mindestens eine Auflage (13) für eine Sitzschiene aufweist, an der diese befestigt werden kann.

## Claims

1. Vehicle body with a floor pan (1) which extends between two side sills (3, 3') and below the passenger area and which has a centre tunnel (2) in the central longitudinal axis, and with a heel plate (5) which makes the connection between the floor pan (1) and a higher, additional floor pan (6), **characterised in that** on the floor pan (1) on either side of the centre tunnel (2) is placed a reinforcing profile (10) which is L-shaped in plan view, a transverse arm (11) running parallel to the heel plate (5) and a longitudinal arm (12) running parallel to the centre tunnel (2), and each reinforcing profile (10) together with the floor pan (1) and the heel plate (6) or the side wall of the centre tunnel (2) forms a box of closed cross-section.

2. Vehicle body according to claim 1, **characterised in that** the transverse arm (11) extends as far as a rear frame (8, 8') which runs substantially parallel to the side sill.

3. Vehicle body according to claim 1 or 2, **characterised in that** the longitudinal arm (12) extends as far as a cross strut (4).

4. Vehicle body according to any of the preceding claims, **characterised in that** the reinforcing profile comprises at least one support (13) for a seat rail, to which the latter can be attached.

## Revendications

1. Carrosserie de véhicule comprenant une tôle de plancher (1) qui s'étend entre deux longerons (3, 3') latéraux, en-dessous de l'habitacle, et présente, au niveau de l'axe médian longitudinal, un tunnel médian, une tôle de talon (5), qui réalise la liaison entre la tôle de plancher (1) et une autre tôle de plancher (6) disposée plus haut, **caractérisée en ce que** sur la tôle de plancher (1), de part et d'autre du tunnel médian, est posé un profilé de renfort (10) en forme de L en vue de dessus, une branche transversale (11) s'étendant parallèlement à la tôle de talon (5) et une branche longitudinale (12) s'étendant parallèlement au tunnel médian (2), et chaque profilé de renfort (10) formant avec la tôle de plancher (1) et la tôle de talon (5) ou la paroi latérale du tunnel médian (2) un caisson à section fermée.

2. Carrosserie selon la revendication 1, **caractérisée en ce que** la branche transversale (11) s'étend jusqu'à un arrière-châssis (8, 8') qui est essentiellement parallèle au longeron latéral.

3. Carrosserie selon la revendication 1 ou 2, **caractérisée en ce que** la branche longitudinale (12) s'étend jusqu'à une traverse (4).

4. Carrosserie selon une des revendications précédentes, **caractérisée en ce que** le profilé de renfort présente au moins une surface d'appui (13) pour une glissière de siège qui est fixée à ladite surface d'appui.
